# EUROPEAN PATENT APPLICATION

(11) **EP 1 714 584 A1**
(43) Date of publication of application: **25.10.2006**
(21) Application number: 05103182.1
(22) Date of filing: 20.04.2005
(51) Int. Cl.: A47C 7/18

(54) **Method for manufacturing a foam cushion for a ventilated seat and a foam cushion produced by such a method**

(71) Applicant: Proseat, 1210 Brussels (BE)
(72) Inventor: Pedde, Burkhard, 63486 Bruchköbel (DE); Heinl, Georg, 64673 Zwingenberg 2 (DE); Willems, Jan, 9260 Schellebelle (BE)
(74) Representative: Van Reet, Joseph

(57) **Abstract**

The foam cushion (1) for a ventilated seat has at least one air channel (9) which extends generally from the second (4) to the first main surface (3) of the foam cushion (1) and which has an inner wall formed at least partially by a substantially airtight covering (22). The foam cushion is moulded in a mould comprising two mould sections (17, 18), at least one of which is provided with one or more projections (21) arranged to form the air channel (9). In a first step, the substantially airtight flexible covering (22) is moulded at least onto one of the projections (21), in particular by a spray process. Then, a foamable composition is introduced into the mould to produce the foam cushion (1), with the airtight covering (22) adhering to the foam. By means of this method, more but smaller coated air channels (9) can be made in the foam cushion to achieve a more uniform distribution of the air flow in the ventilated seat without affecting the comfort properties of the foam cushion.

## Description

The present invention relates to a method for manufacturing a foam cushion for a ventilated seat, in particular a vehicle seat, which foam cushion has a first main surface arranged to support the buttocks or the back of a person, a second main surface situated opposite the first surface and at least one air channel extending generally from the second to the first surface and having an inner wall formed at least partially by a substantially airtight flexible covering.

WO 97/09908 discloses a ventilated seat composed of a bottom seat and a seat back. The bottom seat and the seat back are each formed by a layered structure comprising a foam cushion, a layer of a fibrous air-permeable material placed on top of the foam cushion and an air-permeable trim cover. The fibrous, air-permeable material is enclosed in an airtight bag which is perforated underneath the air-permeable trim cover. The layer of this air-permeable material is intended to distribute the vacuum or the airflow generated by a suction device over the surface of the bottom seat. In this way, the heat and/or moisture can be removed from the surface underneath the person sitting on the ventilated seat.

In this prior art ventilated seat, the suction device is installed underneath the foam cushion and is connected via one relatively large air channel in the foam cushion to the air-distributing layer. In order to avoid leakage of air, the inner wall of the air channel is covered by an airtight covering. This covering may be formed of an airtight rubber bellows which is mounted in the air channel, or it may also be formed by an airtight layer which is sprayed onto the upper surface of the foam cushion and onto the inner wall of the air channel.

A drawback of the foam cushion disclosed in WO 97/09908 is that mounting the rubber bellows in the foam cushions requires a lot of handwork and relatively expensive inserts which have to be manufactured in advance. Moreover, manual placement of the inserts increases the risk for scrap production. The alternative embodiment disclosed in WO 97/09908, namely the application of the airtight layer by spraying it onto the moulded foam cushion, has also an important drawback. An airtight layer can indeed be sprayed quite easily onto the upper surface of the foam cushion but not in relatively small air channels. For a skilled person it will therefore be clear that the foam cushions disclosed in WO 97/09908 comprise only one relatively large air channel in view of the fact that such a large air channel can be coated by a spray process or that only one bellows has to be integrated in the foam cushion. A drawback of the presence of only one relatively large air channel in the foam cushion is, however, that it may have a negative effect on the comfort properties of the seat. Moreover, a thicker air-distributing layer is required to distribute the vacuum (or air pressure) over the surface of the seat. Such a thicker layer has however also a negative effect on the comfort properties of the seat. On the other hand, if a thinner air-distributing layer is provided on top of the foam cushion so that different sections are formed, for example by folds in the trim cover which extend into grooves in the foam cushion, these have to be connected to one another, as disclosed in WO 97/09908, by means of hoses requiring thus again additional inserts and handwork.

Another possibility disclosed in the prior art to avoid air leakage is the use of a foam, such as a closed cell foam, which is impermeable to air. A ventilated seat comprising such a foam cushion is disclosed for example in US-B-6 619 737. A foam cushion made of a closed cell foam however does not provide the comfort properties which are as good as the comfort properties which can be achieved by means of an open cell foam. In practice, moulded foam cushions are therefore usually crushed to open the closed cells.

An object of the present invention is now to provide a new method for manufacturing a foam cushion for a ventilated seat which enables to render also the inner walls of smaller air channels in the foam cushion airtight by providing a substantially airtight covering without having to insert tubular pieces in the foam cushion or without having to make the foam cushion of a closed cell foam material.

To this end, the method according to the invention is characterised in that it comprises the steps of providing a mould composed of at least two mould sections which comprise a first and a second mould surface and which are movable with respect to one another to open and close the mould, the first and/or the second mould surface being provided with one or more projections arranged to form at least a portion of said air channel; moulding said flexible, substantially airtight covering at least onto one of said projections; introducing a foamable composition in the mould to produce the foam cushion therein, the foamable composition being arranged to adhere to said substantially airtight covering and the first and the second main surfaces of the foam cushion being moulded, in the closed state of the mould, against the first and, respectively, against the second mould surface; and removing the produced foam cushion containing the substantially airtight covering from the mould.

Compared to inserting airtight coverings in the air channels of the produced foam cushion, it is much easier to mould the airtight coverings directly onto the projections of the mould surface In this way, the coverings themselves do not have to be produced in advance. They can be moulded in particular by a spray, a thermoforming or a slush moulding process. Not only the projections but also the first and/or the second mould surfaces, or at least a portion thereof, can be provided with the substantially airtight covering to avoid or reduce air leakage. The coverings can further be given the necessary stiffness not to become compressed by the person sitting on the foam cushion. On the other hand, the covering material can be elastic or flexible enough not to influence any comfort aspect of the seat, in particular when making the covering of an elastomer, more particularly of elastomeric polyurethane.

In a preferred embodiment of the method according to the invention, the substantially airtight covering is moulded at least partially starting from a curable composition formulated to produce a flexible coating, in particular a polyurethane composition formulated to produce a non-cellular or micro-cellular elastomer skin, which curable composition is sprayed onto at least one of said projections and/or onto at least one of the mould surfaces and is allowed to cure thereon. The sprayed polyurethane can be formulated so that it has the required stiffness and flexibility and it can be applied easily in quite complex moulds. Moreover, the spray process enables to integrate inserts in the surface of the foam cushion, in particular hook and loop fasteners (such as Velcro®), enabling to avoid expensive assembly of the parts, for example the mounting of a blower device or the application of a trim cover onto the foam cushion.

The invention also relates to a foam cushion made in accordance with the method according to the present invention and to a ventilated seat comprising such a foam cushion.

Other particularities and advantages of the invention will become apparent from the following description of some particular embodiments of the method and the foam cushion and ventilated seat according to the present invention. The reference numerals used in this description relate to the annexed drawings wherein:
Figure 1 is a schematic cross-sectional view, along line I-I in Figure 2, of a ventilated bottom seat comprising a foam cushion according to the present invention;
Figure 2 is a schematic top plan view on the ventilated seat shown in Figure 1; and
Figures 3a - 3b illustrate the different steps of a method according to the invention for manufacturing the foam cushion of the seat illustrated in Figures 1 and 2.

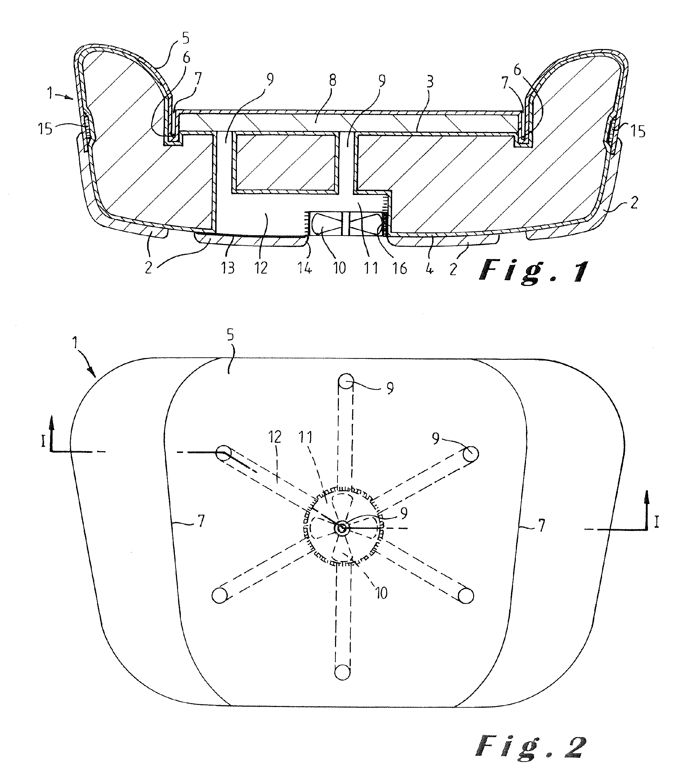

The present invention relates to a method for manufacturing a foam cushion 1 for a ventilated seat, in particular a ventilated vehicle seat, such as a car seat. Depending on its shape, the foam cushion 1 can either be used to construct the bottom seat, i.e. the actual seat, or the seat back of a ventilated seat. In the embodiment illustrated in Figures 1 and 2, the foam cushion 1 is supported by a frame 2 to form the bottom seat of a ventilated car seat. Since it is well known to the skilled person how to make such car seats, the construction of the frame 2 and the way wherein the foam cushion 1 is fixed thereto will not be described further into detail.

The foam cushion 1 for the ventilated seat has a first main surface 3 which is arranged to support a person, in particular the buttocks thereof, and a second main surface 4 which is situated opposite the first main surface 3. In case the foam cushion is intended to be used as seat back, the first main surface 3 is arranged to support the back of the person. At least the first main surface 3 of the foam cushion is covered with a trim cover 5. This trim cover 5 may be made of different materials such as cloth and natural or synthetic leather. Usually the trim cover 5 is fixed by means of wires 6 and hooks (not shown) in grooves 7 in the first main surface 3 of the foam cushion 1. In the seat illustrated in Figure 1, the edges of the trim cover 5 are moreover fixed by means of hook and loop fasteners 15, i.e. with so-called Velcro® strips, to the foam cushion 1.

In the ventilated seat an air-permeable air distributing layer 8 is arranged on at least a portion of the first main surface 3 of the foam cushion 1 between the foam cushion 1 and the trim cover 5. This air distributing layer may consist for example of a reticulated foam layer or of a so-called distance fabric (i.e. a three-dimensional fabric consisting of two woven or knitted textile layers separated by more rigid monofilament spacer yarns maintaining both textile layers at a predetermined distance from one another). Another preferred spacer is formed of a polymeric material in a helix held between two sheets of material. Preferably, the helix is oblong in order to provide increased area on the helix for attachment of the helix to the sheets of material. The helix may be tightly wound such that adjacent courses of the helix touch or loosely wound such that there is no touching of adjacent courses of the helix. Typically, multiple helices are placed adjacent (abutting or otherwise) to one another in order to form a spacer. Exemplary helical material is discussed in international applications WO 2004/082989 and WO 2004/082969.

Further one or more air channels 9 are provided in the foam cushion 1. These air channels 9 extend generally from the second 4 to the first main surface 3 and enable to blow or suck air through the air distributing layer 8. If the portion of the trim cover 5 situated on top of the air distributing layer 8 is air permeable (for example cloth or perforated natural or synthetic leather, in particular a polyurethane skin) an air flow can thus also be generated through the trim cover 5. This air flow enables to cool or heat (when heated air is blown through the air channels) the surface of the seat and/or to remove moisture. If the trim cover 5 is not air permeable, the flow of air through the air distributing layer 8 along the trim cover can also be used to cool or heat the surface of the seat. Moreover, a trim cover which is not or nearly not permeable for air, may still be permeable for moisture or water vapour so that also in that case the flow of air along the trim cover enables to remove moisture from the surface of the seat.

For generating the flow of air, the air channels 9 can be connected to the heating/cooling system of the vehicle or a separate suction/blowing device can be incorporated in the ventilated seat as illustrated in Figures 1 and 2, in particular a ventilator 10. When only one relatively large air channel 9 is provided, or a limited number of relatively large air channels, a ventilator 10 can be mounted in each of the air channels 9. However, in practice, it will usually be preferred to provide a number of smaller air channels 9 so that the air has to flow over a smaller distance through the air distributing layer 8 resulting in a reduced pressure drop or flow resistance (higher flow rate) and a better (more uniform) distribution of the air flow. When there are several air channels 9, the ventilator 10 is preferably used to generate an air flow through two or more of the air channels 9.

In the embodiment illustrated in Figures 1 and 2 this is achieved by providing a recess in the second main surface 4 of the foam cushion 1, which recess comprises a central space 11 connected via grooves 12 to each of the air channels 9. The ventilator 10 is mounted in the central space 11 and the grooves 12 are closed off by means of self-adhesive tape 13 or by means of a foil so that the central space 11 and the grooves 12 form an air distributing cavity which connects the ventilator to the different air channels 9. The foam cushion 1 is fixed to a metal or plastic support plate or scale 2 which is part of the frame of the seat and which may help keeping the foil 13 or tape against the foam cushion. If the scale 2 forms a closed shield, the tape or foil 13 can be omitted and the ventilator can be mounted in an opening 14 in the scale itself. In the embodiment illustrated in Figures 1 and 2, the ventilator 10 is however fixed into the central space 11 by means of a hook and loop fastener strip 16.

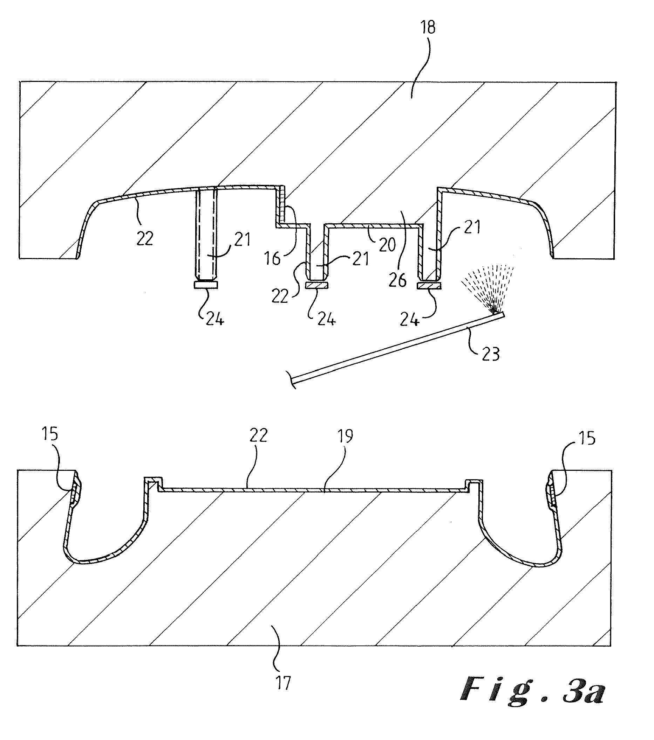

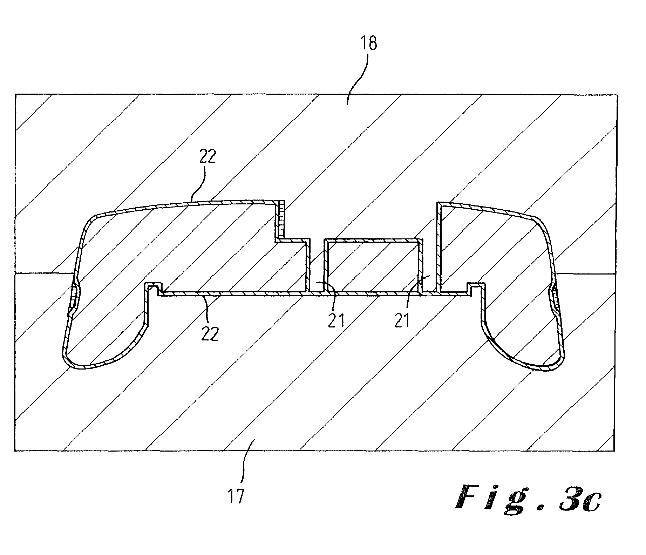

Figures 3a - 3d schematically illustrate a preferred method for manufacturing the foam cushion 1 shown in figures 1 and 2. The foam cushion 1 is made in a mould comprising two mould sections 17 and 18 which are movable with respect to one another to open and close the mould. The first mould section 17 has a first mould surface 19 which is a negative of the first main surface 3 of the foam cushion whilst the second mould section 18 has a second mould surface 20 which is a negative of the second main surface 4 of the foam cushion 1. The second mould surface 20 is provided with projections 21 arranged to form the air channels 9 in the foam cushion. The projections 21 have a top arranged to engage, in the closed position of the mould, the first mould surface 19 so that a through hole will be formed in the foam material (see Figure 3c, only the substantially airtight covering has to be removed by cutting or die-cutting).

Instead of providing the projections 21 onto the second mould surface, the projections 21, or at least some of them, could also be provided on the first mould surface 19. Moreover, it is possible to provide only a partial projection on the first mould surface and a further partial projection on the second mould surface in such a manner that the tops of these partial projections contact one another in the closed position of the mould, so that again an air channel will be formed in the foam material.

In a first step of the preferred method illustrated in the figures, inserts may be positioned in the mould and a curable composition is sprayed by means of a spray gun 23 onto the projections 21 and preferably also onto the first 19 and the second mould surface 20. In the present specification, the first and the second mould surface means that portion of the surface of the first 17 and respectively the second mould section 18 against which the foam cushion is moulded, not including the projections 21 which are arranged to form the air channels or at least a portion thereof. In Figure 3a the Velcro® strips 16 for mounting the ventilator 10 and the Velcro® strips 15 for attaching the trim cover 5 are positioned onto the mould surface before spraying the curable composition.

The curable composition is formulated to produce a flexible coating forming, after curing, a substantially airtight covering 22. This curable composition is also sprayed at least partially onto the back of the inserts so that they are fixed to the substantially airtight covering 22. The curable composition is preferably a polyurethane composition formulated to produce a non-cellular or micro-cellular elastomer skin. Examples of such polyurethane compositions, more particularly of reactive polyurethane mixtures, are disclosed in EP-B-0 379 246 whilst methods and spray nozzles for spraying the polyurethane compositions are disclosed for example in EP-B-0 303 305 and EP-B-0 389 014. As well light stable "aliphatic" polyurethane formulations, as disclosed in these prior art documents, as non light stable aromatic polyurethane formulations may be used. Furthermore, a light stable in-mould coating (paint) can be applied on the mould surface before the polyurethane skin composition is sprayed. Instead of spraying an elastomeric polyurethane skin against the mould surface or against an in-mould coating layer, it is also possible to only apply a thin, water or solvent based in-mould coating, in particular a paint coating, onto the mould surface. This in-mould coating is supported by the foam of the foam cushion and can also provide the required substantially airtight covering, especially if the foam forms a sufficiently dense layer underneath the in-mould coating.

The substantially airtight covering 22, in particular the polyurethane elastomer layer, has preferably an average thickness smaller than 2 mm and more preferably smaller than 1 mm. The average thickness is preferably larger than 50 µm and more preferably larger than 100 µm.

When spraying the curable composition onto the projections 21, the tops of these projections 21 are preferably shielded off by means of a mask 24. In case no curable composition is sprayed onto the opposite mould surface 19, an open air channel 9 can thus be achieved immediately. On the other hand, when the curable composition is also sprayed onto the opposite mould surface 19, this mould surface can also be shielded off locally by means of a mask. If not, the air channels are to be opened after the foam cushion is produced, for example by cutting or die cutting.

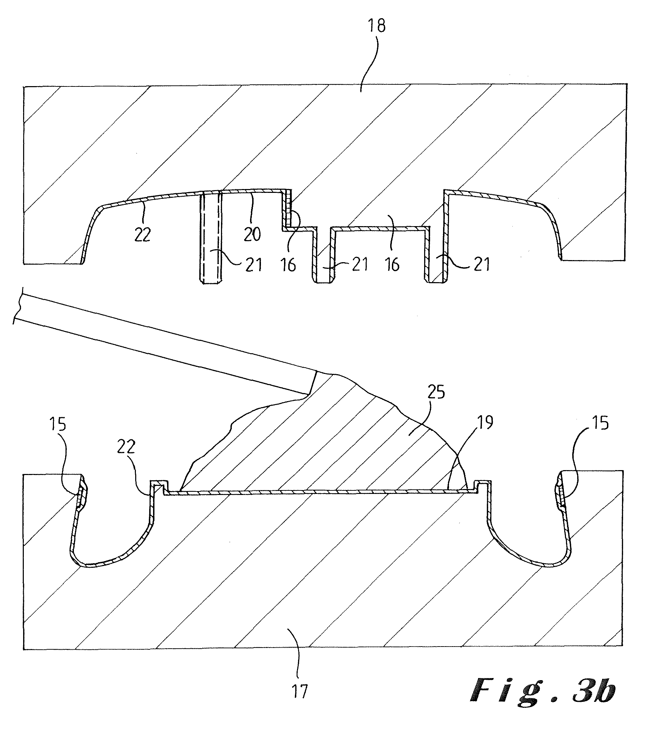

After the curable composition has been sprayed onto the mould surfaces 19, 20, a foamable composition 25 is introduced into the mould. This can be done, as illustrated in Figure 3b, by pouring the foamable composition 25 into the open mould or by injecting the foamable composition 25 into the closed mould. The foamable composition is preferably a polyurethane composition, for example a foamable polyurethane composition as disclosed in the Examples of EP-B-0 386 818. The foamable composition may be composed to produce an open cell foam, at least 50% of the cells of which are open. If the produced foam comprises too much closed cells in view of the desired comfort properties, at least a number of the closed cells can be opened after the production of the foam cushion, in particular by mechanical crushing or by subjecting the foam cushion to a vacuum so that the cells are opened.

Before introducing the foamable composition into the mould, further inserts can be positioned therein, in particular elements which will be part of the frame of the ventilated seat. Such inserts have not been illustrated in the figures.

After having poured the foamable composition into the mould, the mould is closed and the foamable composition is allowed to foam and to cure to produce the foam cushion. As can be seen in Figure 3c, the projections 21 on the second mould surface 20 are pushed against the layer of the curable composition sprayed onto the first mould surface 19, when closing the mould (no mask has been used to shield off the first mould surface). The mould is preferably closed when the curable composition has not been cured completely so that it can be pressed away at least partially. In this way, a weakened zone is formed which can be removed more easily, even without cutting, to open the air channels 9 in the produced foam cushion 1.

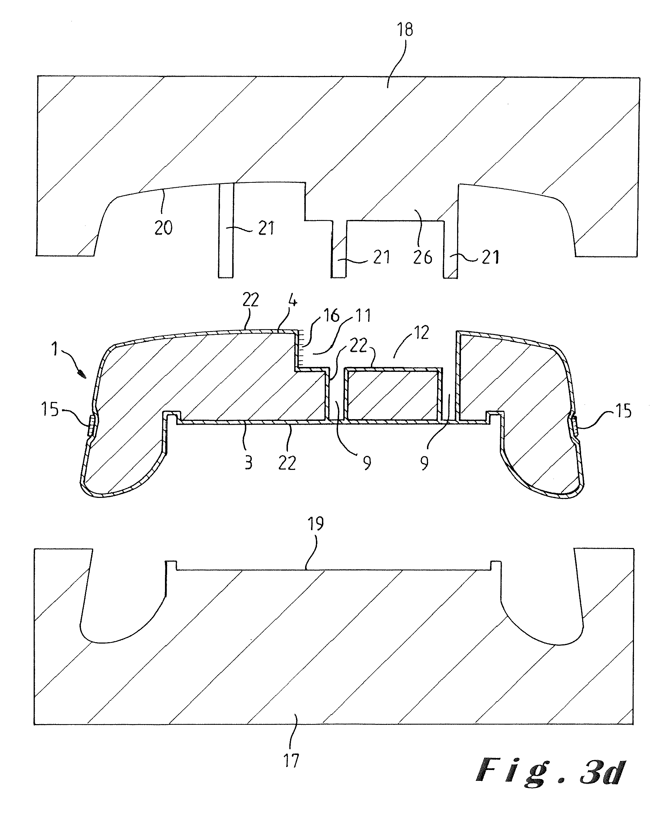

In a last step, illustrated in Figure 3d, the mould is opened and the produced foam cushion is removed from the mould. This foam cushion 1 consists of the foam core having a substantially airtight covering not only on the inner walls of the air channels 9, but also on its two main surfaces 3 and 4.

The second mould surface 20 is shaped to form a portion of the inner wall of the air distributing cavity formed by the central space 11 and the grooves 12. These grooves 12 are formed by ridges 26 on the second mould surface 20. Since the substantially airtight covering 22 is preferably also moulded onto the second mould surface 20, not only the inner wall of the air channels 9 but also the inner wall of the air distributing cavity moulded in the foam cushion is formed by the substantially airtight covering 22. As explained already hereabove, the grooves 12 in the foam cushion can easily be closed off for example by means of self-adhesive tape 13 to form a closed air distributing cavity on the back side of the foam cushion 1. On the other hand, it is also possible to mould one larger air distributing cavity on the back of the foam cushion (with no grooves) which can be closed off also easily for example by means of a metal or plastic plate.

Since the substantially airtight covering 22 can be moulded quite easily onto the projections 21, and since the foam cushion comprises preferably more but smaller air channels 9, in particular more than 2, preferably more than 3 and more preferably more than 4 air channels, the projections 21 are preferably sized to form an air channel 9 having a cross-sectional area, measured in a flat plane which is generally parallel to the first main surface 3 of the foam cushion 1, which is at least locally smaller than 70 cm², preferably smaller than 40 cm² and more preferably smaller than 25 cm².

Although preference is given to spraying a curable composition for moulding the substantially airtight covering 22, this airtight covering can also be produced by moulding a thermoplastic material in molten state, or by thermoforming a thermoplastic foil against at least one of said projections 21 and/or onto at least one of the mould surfaces 19, 20. Moreover, it is possible to mould different portions of the substantially airtight covering 22 by different moulding processes.

Moulding a thermoplastic material in a molten state against the projections 21 and/or against the mould surfaces, can be done by a liquid or powder slush moulding process as disclosed for example in US-A-5 328 349. On the other hand, the thermoplastic material can also be sprayed in powder form onto the heated mould surface, as disclosed for example in US-A-5 370 831. In a thermoforming process, a thermoplastic foil is thermoformed against a heated mould surface.

An important advantage of the method according to the invention is that it enables to provide in an easy way, without much additional manual labour, more but smaller coated air channels in the foam cushion of a ventilated seat so that a better distribution of the air can be achieved without affecting the comfort properties of the foam. Tests have shown that by the substantially airtight covering of the inner wall of the air channels and of the air distributing cavity 11, 12 on the back of the foam cushion, the air flow through the cushion increased up to 30%, compared to a foam cushion comprising no air tight covering. When providing also the upper side of the foam cushion with a substantially airtight covering, the air flow even increased up to 65%. From the tests it appeared that the smaller the air permeability of the trim covers, the higher the increase of the air flow.

## Claims

1. A method for manufacturing a foam cushion (1) for a ventilated seat, which foam cushion (1) has a first main surface (3) arranged to support the buttocks or the back of a person, a second main surface (4) situated opposite the first main surface (3) and at least one air channel (9) extending generally from the second to the first main surface and having an inner wall formed at least partially by a substantially airtight flexible covering (22), **characterised in that** the method comprises the steps of:
- providing a mould composed of at least two mould sections (17, 18) which comprise a first (19) and a second mould surface (20) and which are movable with respect to one another to open and close the mould, the first and/or the second mould surface being provided with one or more projections (21) arranged to form at least a portion of said air channel (9);
- moulding said substantially airtight covering (22) at least onto one of said projections (21);
- introducing a foamable composition (25) in the mould to produce the foam cushion (1) therein, the foamable composition (25) being arranged to adhere to said substantially airtight covering (22) and the first (3) and the second main surfaces (4) of the foam cushion (1) being moulded, in the closed state of the mould, against the first (19) and, respectively, against the second mould surface (20); and
- removing the produced foam cushion (1) containing the substantially airtight covering (22) from the mould (17, 18).

2. A method according to claim 1, **characterised in that** at least one of said projections (21) has a top arranged to engage the opposite mould surface (17), and/or to engage one of said projections provided thereon, in the closed position of the mould (17, 18).

3. A method according to claim 1 or 2, **characterised in that** the substantially airtight covering (22) is also moulded onto at least a portion of the first mould surface (19) and/or onto at least a portion of the second mould surface (20).

4. A method according to any of the claims 1 to 3, **characterised in that** the substantially airtight covering (22) is moulded at least partially starting from a curable composition formulated to produce a flexible coating, in particular a polyurethane composition formulated to produce a non-cellular or micro-cellular elastomer skin, which curable composition is sprayed onto at least one of said projections (21) and/or onto at least one of the mould surfaces (19, 20) and is allowed to cure thereon.

5. A method according to claim 4, **characterised in that** an insert is positioned onto at least one of said projections (21) and/or onto at least one of the mould surfaces (19, 20) before spraying the curable composition, the curable composition being sprayed at least partially onto the insert (15, 16) to fix the insert to the surface of the foam cushion.

6. A method according to any of the claims 1 to 5, **characterised in that** the substantially airtight covering (22) is made at least partially of a thermoplastic material which is moulded, in molten state, against at least one of said projections (21) and/or against at least one of the mould surfaces (19, 20), by a spray or by a powder or liquid slush moulding process.

7. A method according to any of the claims 1 to 6, **characterised in that** the substantially airtight covering (22) is moulded at least partially by a thermoforming process wherein a thermoplastic foil is thermoformed against at least one of said projections (21) and/or against at least one of the mould surfaces (19, 20).

8. A method according to any of the claims 1 to 7, **characterised in that** the foam cushion (1) comprises at least two air channels (9) which extend generally from the second (4) to the first main surface (3) of the foam cushion (1) and the substantially airtight covering (22) is moulded onto the second mould surface (20) to form a portion of the inner wall of an air distributing cavity (11, 12) connecting said at least two air channels (9).

9. A method according to any of the claims 1 to 8 **characterised in that** the foamable composition is composed to produce an open cell foam, at least 50% of the cells of which are open, and/or the foam of the produced foam cushion comprises closed cells at least a portion of which are opened, in particular by crushing or by subjecting the foam to a vacuum.

10. A method according to any of the claims 1 to 9, **characterised in that** at least one of said projections (21) is sized to form an air channel (9) having a cross-sectional area, measured in a flat plane which is generally parallel to the first main surface (3) of the foam cushion (1), which is at least locally smaller than 70 cm², preferably smaller than 40 cm² and more preferably smaller than 25 cm².

11. A method according to any of the claims 1 to 10, **characterised in that** the foam cushion (1) is provided with a seat frame (2) to produce a ventilated seat.

12. A foam cushion (1) for a ventilated seat, which foam cushion has a first main surface (3) arranged to support the buttocks or the back of a person, a second main surface (4) situated opposite the first main surface and one or more air channels (9) extending generally from the second (4) to the first main surface (3) and having an inner wall formed at least partially by a substantially airtight covering (22), **characterised in that** the foam cushion (1) is obtained by a method according to any of the claims 1 to 10.

13. A ventilated seat comprising a foam cushion (1) according to claim 12, the first main surface (3) of which is covered by a trim cover (5) and by an air-permeable air distributing layer (8) arranged between the trim cover (5) and the first main surface (3) of the foam cushion (1).
